**Europäisches Patentamt**

**European Patent Office**

**Office européen des brevets**

(19)

(11) **EP 1 381 248 A1**

(12) **EUROPÄISCHE PATENTANMELDUNG**

(43) Veröffentlichungstag:
**14.01.2004 Patentblatt 2004/03**

(51) Int Cl.⁷: $H04Q\ 7/38$

(21) Anmeldenummer: **02014987.8**

(22) Anmeldetag: **09.07.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
- **Ball, Carsten, Dr.**
  **76764 Rheinzabern (DE)**
- **Bublin, Mugdim**
  **1150 Wien (AT)**
- **Garcia-Larrodé, Maria**
  **81379 München (DE)**
- **Ivanov, Kolio, Dr.**
  **81369 München (DE)**
- **Müllner, Robert**
  **81379 München (DE)**
- **Ostermayer, Gerald, Dr.**
  **1160 Wien (AT)**
- **Slanina, Peter**
  **3441 Judenau (AT)**
- **Stark, Thomas**
  **81476 München (DE)**

(54) **Verfahren zur Kanalzuweisung in einem Funkkommunikationssystem**

(57)     Für einen Teilnehmer wird ermittelt, welche Kanäle ihm für eine Verbindung auf Grund eines Anforderungsprofils für die Verbindung zugewiesen werden können. Für die ermittelten Kanäle wird jeweils untersucht, welche Verschlechterung des Funkkommunikationssystems zu erwarten ist, wenn dem Teilnehmer der jeweilige Kanal zugewiesen wird. Dem Teilnehmer wird anschließend derjenige Kanal zugewiesen, für den die geringste Verschlechterung des gesamten Funkkommunikationssystems erwartet wird.

**FIG 1**

Bestimme mögliche
Kanäle für Verbindung

Berechne für jeden
möglichen Kanal das
Bewertungsmaß mit Hilfe
einer Zielfunktion

Ermittle das Minimum
der berechneten
Bewertungsmaße

Weise den Kanal mit
minimalem
Bewertungsmaß zu

**EP 1 381 248 A1**

**Beschreibung**

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Die Funkschnittstelle wird dabei in Kanäle organisiert, die unterscheidbar sind und die einzelnen Teilnehmern zugewiesen werden.

In dem bekannten GSM-Mobilfunksystem, sowie dessen Weiterentwicklung mit einem Paketdatendienst GPRS beziehungsweise EGPRS, deren Architektur zum Beispiel in B. Walke "Mobilfunknetze und ihre Protokolle", Band 1, Teubner-Verlag Stuttgart, 1998, Seite 138 bis 151, sowie Seite 295 bis 311, beschrieben ist, wird ein Kanal durch einen schmalbandigen Frequenzbereich und einen Zeitschlitz gebildet. Da sich ein Teilnehmersignal in einem Kanal in Frequenz und Zeit von den übrigen Teilnehmersignalen unterscheidet, kann die Funkstation eine Detektion der Daten des Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

Bei einer Verbindungsanfrage für eine neue Verbindung wird vom Funkkommunikationssystem ein freier Kanal bestimmt, der der neuen Verbindung zugewiesen wird. Diese erfolgt in der Regel im Radio Ressource Management, das in der Basisstationssteuerung angesiedelt ist. Abhängig von der Art der Übertragung und deren Kodierung ist die Verbindung mehr oder weniger empfindlich auf Störungen durch Interferenzen durch andere Verbindungen. Hochratige Kodierschemata, wie sie häufig bei der Übertragung paketorientierter Daten unter guten Radiobedingungen verwendet werden, sind nur gering oder gar nicht (CS-4, MCS-9) durch zusätzliche Kanalkodierung gegen Fehler bei der Übertragung über die Luftschnittstelle geschützt, während robustere Kodierschemata durch Kanalkodierung stärker geschützt sind, deren Nutzdatendurchsatzraten bei gleicher Anzahl an Bits pro Kanal aber dagegen entspreched geringer sind. Dasselbe gilt beispielsweise für leitungsgebundene Sprachübertragungen, bei denen bestimmte Sprachcodecs durch höhere Kanalkodierung stärker gegenüber Fehlern geschützt sind, und andere Sprachcodecs mit geringerer Kanalcodierung anfälliger gegenüber Interferenzen sind. Das Auftreten von Interferenzen in einem Kanal kann durch die funktechnische Organisation der Funkschnittstelle beeinflusst werden. Abhängig unter anderem vom angewendeten Frequenzwiederholungsmuster und der Last auf diesem Kanal, treten in einem Kanal mehr oder weniger starke Interferenzen auf. Wird ein Frequenzwiederholungsmuster mit großem Frequenzwiederholabstand gewählt, bei dem der Abstand zwischen zwei Zellen, in denen dieselbe Frequenz verwendet wird, groß ist, so treten weniger Interferenzen auf, als in einem Frequenzwiederholungsmuster mit kleinem Frequenzwiederholungsabstand, bei dem der Abstand zwischen Zellen, die dieselbe Frequenz verwenden, klein ist. Im Extremfall wird in benachbarten Zellen dieselbe Frequenz verwendet. In neueren Funkkommunikationssystemen werden gleichzeitig Kanäle in unterschiedlichen Organisationsformen betrieben, um den Anforderungen an die verschiedenen Arten von Informationsübertragungen und der zu erzielenden Kapazität gerecht zu werden.

Die Zuweisung eines Kanals für eine neue Verbindung erfolgt in bekannten Funkkommunikationssystemen nach einem vorgegebenen Schema, das in der Regel die unterschiedlichen Anforderungen an die Kanäle berücksichtigt. Es werden beispielsweise bestimmte Kanäle für die Übertragung von Sprache, andere Kanäle für die Übertragung von Daten festgelegt. Darüber hinaus können Kanäle definiert werden, auf denen in abwechselnder Weise sowohl Sprache, als auch Daten übertragen werden kann, und für die eine feste Belegungsregel vorgegeben ist. Kommt eine Verbindungsanfrage zum Beispiel für eine Datenübertragung, und sind alle Kanäle, die für Datenübertragung, sowie für Daten- oder Sprachübertragung vorgesehen sind, belegt, so muss diese Verbindungsanfrage abgewiesen werden, auch wenn weitere Kanäle, die für Sprachübertragung bestimmt sind, zur Verfügung stehen. Dadurch wird die Kapazität des Funkkommunikationssystems nur unzureichend ausgenutzt.

Der Erfindung liegt daher das Problem zugrunde, ein Verfahren zur Kanalzuweisung in einem Funkkommunikationssystem anzugeben, bei dem die Kapazität des Funkkommunikationssystems besser ausgenutzt wird.

Dieses Problem wird gelöst durch ein Verfahren gemäß Anspruch 1. Weitere Ausgestaltungen der Erfindung gehen aus den übrigen Ansprüchen hervor.

Für einen Teilnehmer wird ermittelt, welche Kanäle ihm für eine Verbindung auf Grund eines Anforderungsprofils für die Verbindung zugewiesen werden können. Als Kanal werden dabei unterscheidbare Funkressourcen auf der Funkschnittstelle bezeichnet. Es kann sich auch um Anteile eines physikalischen Kanals handeln. Für diese ermittelten Kanäle, die verschiedene Optionen für die Verbindung darstellen, wird anschließend untersucht, welche Verschlechterung des Funkkommunikationssystems für jede dieser Optionen zu erwarten ist, wenn dem Teilnehmer für die Verbindung der jeweilige Kanal zugewiesen wird. Die Verschlechterung des Funkkommunikationssystems tritt durch das Hinzukommen eines weiteren Teilnehmers, beispielsweise wegen zusätzlicher Interferenz, geringerer erreichbarer Datenrate des neu hinzukommenden Teilnehmers, falls nur ein geringerer Anteil an Kanälen als maximal zuweisbar verfügbar ist, Reduzierung der Durchsatzraten bestehender Verbindungen durch gemeinsames Verwenden der belegten Kanalanteile mit dem neu hinzukommenden Teilnehmer, störende Einwirkungen bei einer Sprachverbindung durch einen erzwungenen Wechsel des Kanals (Handover), Erhöhung der Sendeleistung und damit der Interferenz auf andere Verbindungen durch Zuweisen einer neuen oder bestehenden Verbindung in eine weiter entfernte Funkzelle, Erhöhung des Ungleichgewichts zwischen unterschiedlichen Frequenzbändern (z.B. GSM900/GSM1800) oder unterschiedlichen Netzen (z.B. GSM und UMTS) eines Betreibers oder ähnliches auf. Bei dieser Untersuchung werden daher alle für eine bestimmte Option betroffenen Verbindungen im Funkkommunikationssystem betrachtet, die durch die Verbindung des neuen Teilnehmers beeinflusst werden. Das sind insbesondere Verbindungen, für die eine höhere Interferenz erwartet wird, Verbindungen, denen andere oder weniger Funkressourcen zugewiesen werden müssen, um Funkressourcen für die neue Verbindung freizugeben und die neuen Verbindung zu ermöglichen, sowie speziell die neu hinzukommende Verbindung, für die unterschiedliche Qualität auf unterschiedlichen Kanälen gemäß der zu untersuchenden Optionen zu erwarten ist. Zudem ist die Beeinflussung der Komponenten des Mobilfunksystems zu betrachten, beispielsweise der erhöhte Rechenaufwand durch sehr starke Umkonfigurationen der momentanen Kanalbelegung und die damit verringerte Prozessorleistung, die für andere Aufgaben zur Verfügung steht. Weitere, sich negativ auswirkenden Einflüsse wie beipielsweise ein erzwungenes Verschieben einer bestehenden Verbindung auf einen anderen Kanal werden analysiert und jeweils der Grad der Verschlechterung für das Gesamtsystem für jede Option bestimmt.

Diese Untersuchung wird für alle Kanäle durchgeführt, die der neuen Verbindung zugewiesen werden können. Nachfolgend wird überprüft, für welchen Kanal die geringste Verschlechterung des Funkkommunikationssystems zu erwarten ist, falls er der neuen Verbindung zugewiesen wird. Dieser Kanal wird dem Teilnehmer nachfolgend zugewiesen. Durch diese Vorgehensweise wird sichergestellt, dass alle Kanäle für die Übertragung von Information genutzt werden, und dass jeder Verbindung der Kanal zugewiesen wird, der auf Grund des Anforderungsprofils der Verbindung im Hinblick auf das gesamte Funkkommunikationssystem optimal ist. Auf diese Weise wird die Kapazität des Funkkommunikationssystems so gut wie möglich ausgenutzt.

Es liegt im Rahmen der Erfindung, für die ermittelten Kanäle, die für eine Zuweisung zu der Verbindung in Frage kommen, jeweils mit Hilfe einer Zielwertfunktion ein Bewertungsmaß zu berechnen, die ein Maß für die Verschlechterung des Funkkommunikationssystems ist. Unter den berechneten Bewertungsmaßen für die einzelnen Kanäle wird das Minimum der negativen Beeinflussung des Gesamtsystems bestimmt. Das erfolgt durch eine Extremwertbestimmung des Bewertungsmaßes. Ist das Bewertungsmaß so definiert, dass ein hoher Wert einer großen Verschlechterung entspricht, wird das Minimum des Bewertungsmaßes ermittelt, ist das Bewertungsmaß dagegen so definiert, dass ein niedriger Wert einer großen Verschlechterung entspricht, wird das Maximum des Bewertungsmaßes ermittelt Anschließend wird die Option, für die das Bewertungsmaß den Extremwert annimmt, der einem Minimum der Verschlechterung des Gesamtsystems entspricht, gewählt und der entsprechende Kanal bzw. Kanalanteil bzw. Kanäle oder Kanalanteile zugewiesen.

Zielwertfunktionen sind aus der Mathematik bekannt (siehe zum Beispiel Ignor N. Kovalenko, Nickolaj Yu. Kuznetsov, Philip A. Pegg: Mathematical Theory of Reliability of Time Dependent Systems with Practical Applications (John Wiley & Sons, ISBN 0 471 950602, Seite 33 ff) oder Leonard Kleinrock: Queueing Systems Volume II: Computer Applications(John Wiley & Sons, ISBN 0-471-49111-X (v.2), Seiten 301, 330-339) oder Te Chiang Hu: Ganzzahlige Programmierung und Netzwerkflüsse (Oldenburg, ISBN 3-486-33841-2, Seite 177, 196 ff) oder Stephen Wolfram: Das Mathematica Buch (Addison-Wesley, ISBN 3-8273-1036-9, Seite 843, 964, 1132-1133).

Eine Zielwertfunktion berechnet nach einer festen Berechnungsvorschrift aus Eingangsparametern einen Ausgangsparameter, das Bewertungsmaß. Die Eingangsparameter können Gewichte sein oder mit Gewichten behaftet werden.

Vorzugsweise werden als Gewichte für die Zielfunktion Funkparameter verwendet. Dabei sind insbesondere folgende Funkparameter geeignet: Frequenzwiederholungsabstand, mittlere Interferenzpegel, angewendetes Frequenzsprungsystem, das heisst, die Information, ob ein Frequenzsprungverfahren vorgesehen ist oder nicht, Anzahl der verwendeten Frequenzen beim Frequenzsprungverfahren, diskontinuierliche Übertragung (DTX), Leistungssteuerung, Anzahl der Zeitschlitze, die für einen Dienst zur Verfügung stehen, RXLEV-, RXQUAL- und C/I-Messungen, BER-, BLER-, FER-Messungen sowie Statistiken oder Trend-Analysen daraus. Vorzugsweise können diese Funkparameter oder Teile davon eingelesen werden, beipielsweise über (Funk-)Netzplanungstools. Weitere Parameter, die als Eingangsgrößen für die Zielfunktion verwendet werden können, sind Eigenschaften des Übertragungstyps, zum Beispiel unterschiedliche Empfindlichkeit gegenüber Interferenz oder Parameter für den Betrieb des Funkkommunikationssystems, zum Beispiel Prioritäten für einzelne Übertragungstypen wie Sprache, verbindungsorientierte Datenübertragung oder paketorientierte Datenübertragung, sowie Dienstgüteparameter.

Der Einsatz der Zielwertfunktion hat den Vorteil, dass das Verfahren auf einfache Weise an eine Änderung der Funkparameter oder der Funkorganisationsparameter sowie der gewählten Priorität für die Handhabung der unterschiedlichen Übertragungstypen angepasst werden kann. Insbesondere kann das Verfahren flexibel an die Anforderungen unterschiedlicher Betreiber angepasst werden. Geänderte Gewichte können ohne Änderung der Hardware eingespielt werden.

Vorzugsweise werden fortlaufend Messungen durchgeführt, aus deren Ergebnissen aktuelle Gewichtswerte abgeleitet werden. Die aktuellen Gewichtswerte werden dann zur Anpassung der Gewichte verwendet. Auf diese Weise wird eine dynamische Anpassung an aktuelle Funkverhältnisse erzielt.

Es liegt ferner im Rahmen der Erfindung, die Gewichte, in Abhängigkeit der Verkehrslast, die beispielsweise ebenfalls gemessen wird, zu verändern.

Vorzugsweise wird bei einer Verbindungsanfrage geprüft, ob die ermittelte geringste Verschlechterung des gesamten Funkkommunikationssystems eine vorgegebene Schwelle übersteigt. Ist dieses der Fall, so wird die Verbindungsanfrage abgewiesen. Dadurch wird sichergestellt, dass durch eine neue Verbindung die Verbindungsqualität der bestehenden Verbindungen nicht unter einen vorgegebenen Mindestwert gesenkt wird. Auf diese Weise wird sichergestellt, dass die Zufriedenheit der Teilnehmer der bestehenden Verbindungen erhalten bleibt.

Gemäß einer weiteren vorteilhaften Ausgestaltung wird für bestehende Verbindungen fortlaufend geprüft, ob der jeweiligen Verbindung ein anderer Kanal zugewiesen werden kann, für den eine geringere Verschlechterung des Gesamtsystems zu erwarten ist, als für den aktuell zugewiesenen Kanal. Falls der Differenzbetrag zwischen dem aktuellen Bewertungsmaß und des zu erwartenden Bewertungsmaßes einen vorgegebenen Wert übersteigt, wird der Verbindung der andere Kanal zugewiesen beziehungsweise andere Kanäle oder Kanalanteile. Auf diese Weise wird auch für den Fall von Änderungen der Funkbedingungen sichergestellt, dass jeder Teilnehmer stets den im Hinblick auf das gesamte Funkkommunikationsnetz optimalen Kanal zugewiesen bekommt.

Im Folgenden wird die Erfindung anhand von Beispielen und Figuren näher erläutert.

Figur 1 zeigt ein Ablaufdiagramm für das erfindungsgemäße Verfahren.

Figur 2 zeigt für verschiedenen Sprachübertragungsarten den Spracheindruck als Funktion des Signal-zu-Störverhältnis.

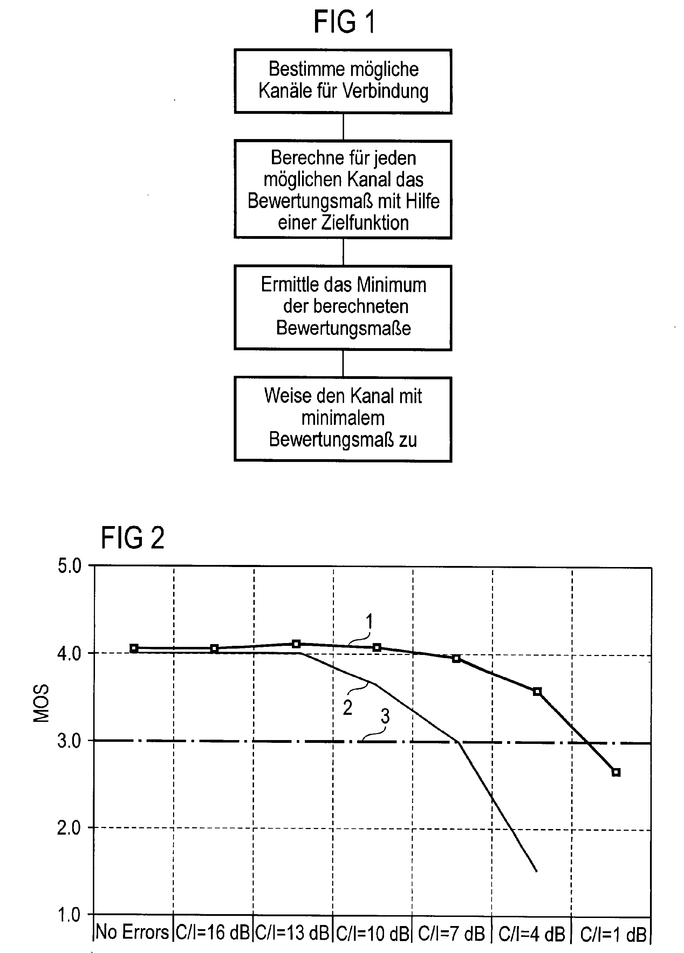

Für eine Verbindung wird festgestellt, welche Kanäle der Verbindung zugewiesen werden können (siehe Figur 1). Dabei kann es sich um freie Kanäle handeln oder um Kanäle, die mit anderen Verbindungen geteilt werden. Darüber hinaus können Kanäle durch eine Veränderung der Kanalzuweisung für andere Verbindungen für die betrachtete Verbindung freigegeben werden. Beispielsweise kann für eine bestehende Verbindung die Datenrate reduziert werden, um einen Kanal für die betrachtete Verbindung zu finden.

Anschließend wird für jeden dieser möglichen Kanäle das Bewertungsmaß mit Hilfe einer Zielwertfunktion berechnet. Bei dieser Berechnung wird auch der Einfluss auf bestehende Verbindungen berücksichtigt. Beispielsweise wird berücksichtigt, wenn die Anzahl der einer Verbindung zugewiesenen Kanalanteile und damit die Datenrate oder das Kodierschema für eine bestehende Verbindung geändert werden muss, und dadurch die Bedingungen für die bestehende Verbindung verschlechtert werden.

Es wird das Minimum der berechneten Bewertungsmaße ermittelt. Der Kanal, mit dem das minimale Bewertungsmaß für alle durch diese Option beeinflussten Dienste erzielt wird, wird der Verbindung zugewiesen.

In einem Ausführungsbeispiel werden von einem Funkkommunikationssystem EDGE-Verbindungen, GPRS-Verbindungen, EFR-Verbindungen (das heisst Enhanced Full Rate Verbindungen) und AMR FR-Verbindungen (das heisst Adaptive Multi Rate Full Rate Vebindungen) unterstützt. Eine Zelle wird von zwei Sende-/Empfangseinheiten versorgt, wobei eine erste Sende-/Empfangseinheit als BCCH-Träger mit einem hohen Frequenzwiederholabstand und eine zweite Sende-/Empfangseinheit als Nicht-BCCH-Träger mit einem kleineren Frequenzwiederholabstand geplant ist. In dem Funkkommunikationssystems ist beispielsweise vorgesehen, EDGE-Verbindungen nur Kanäle auf der ersten Sende-/Empfangseinheit zuzuweisen. GPRS-Verbindungen und EFR-Verbindungen sollen vorzugsweise Kanäle auf der ersten Sende-/Empfangseinheit zugewiesen werden. AMR FR-Verbindungen, die zur Sprachübertragung eingesetzt werden, sollen vorzugsweise Kanäle auf der zweiten Sende-/Empfangseinheit zugewiesen werden.

Es wird folgende Kanalzuweisungstabelle für die Zelle gebildet:

| Verbindungsart | 1. Sende-/Empfangseinheit | 2. Sende-/Empfangseinheit |
|---|---|---|
| EDGE | 1,0 | 0,0 |
| GPRS | 0,8 | 0,2 |
| EFR | 0,7 | 0,3 |
| AMR FR | 0,1 | 0,9 |

Die Tabelle enthält jeweils Zuweisungswerte, die angegeben, welche Dienste bevorzugt auf welcher Sende-/Empfangseinheit allokiert werden sollen und zu welchem Grade sie auch der jeweils anderen Sende-/Empfangseinheit zugewiesen werden kann. Dieser letzte Punkt ergibt sich aus der Differenz der Zuweisungswerte. Ein EDGE-Dienst darf in diesem Beipiel nur auf der 1. Sende-/Empfangseinheit allokiert werden, da der Zuweisungsanteil auf der 2. Sende-/Empfangseinheit mit dem Wert 0 eine Allokierung verbietet. Die Differenz aus beiden Zuweisungspotionen beträgt 1.0. Hierbei können beispielsweise Hardware-Einschränkungen berücksichtigt werden. Für EFR beträgt die Diffrenz aus beiden Zuweisungswerten nur 0,4, während sie für AMR FR 0,8 beträgt. EFR-Dienste werden bevorzugt der 1. Sende-/Empfangseinheit zugewiesen, können aber auch der 2. Sende-/Empfangseinheit zugeteilt werden, wobei der Grad der Verletzung in diesem Fall geringer ist als für AMR FR, was durch den geringeren Differenzbetrag für EFR im Vergleich zu AMR FR bestimmt wird. Bei AMR FR wird bevorzugt die 2. Sende-/Empfangseinheit gewählt, doch auch dieser Dienst kann der 1. Sende-/Empfangseinheit zugewiesen werden.

Die Tabelle wird auf der Basis von Nutz- zu Störsignalmessungen und auf Grund der Netzplanung erstellt.

Sind auf beiden Sende-/Empfangseinheiten ausreichend Kanäle verfügbar, so wird bei einer neuen Verbindungsanfrage der Wert der Tabelle verwendet, um Zielfunktionen unter Berücksichtigung der momentanen Verkehrslast zu berechnen.

Sind auf der bevorzugten Sende-/Empfangseinheit nicht ausreichend Kanäle verfügbar, so werden Zielfunktionen berechnet und es wird die Sende-/Empfangseinheit ausgewählt, bei der die geringste Verschlechterung des gesamten Funkkommunikationssystems erwartet wird.

Beispielsweise liegt eine Verbindungsanfrage für eine neue EFR-Verbindung vor. Die erste Sende-/Empfangseinheit ist gut ausgelastet mit Sprachverbindungen, GPRS- und EDGE-Verbindungen. Auf der zweiten Sende-/Empfangseinheit sind freie Kanäle verfügbar. Entsprechend der Kanalzuweisungstabelle führt die Zuweisung eines Kanals auf der zweiten Sende-/Empfangseinheit für die neue EFR-Verbindung zu einer Verschlechterung des gesamten Funkkommunikationssystems von 0,3-0,7=-0,4. Die Verschlechterung des Funkkommunikationssystems wird in diesem Beispiel als Differenz zwischen dem Wert für die Sende-/Empfangseinheit, auf der ein Kanal zugewiesen wird, und dem Wert für die bevorzugte Zuweisung, d.h. dem höchsten Zahlenwert in der Zuweisungstabelle für diesen Dienst, berechnet.

Eine Alternative dazu ist eine Kanalzuweisung für die neue EFR-Verbindung auf der ersten Sende-/Empfangseinheit, die für die Kanalzuweisung von EFR-Verbindungen entsprechend dem Wert 0,7 bevorzugt werden soll. In diesem Fall trägt die Zuweisung der neuen EFR-Verbindung zur Verschlechterung des gesamten Funkkommunikationssystems nicht bei, jedoch müssen die anderen Verbindungen, denen Kanäle auf der ersten Sende-/Empfangseinheit zugewiesen sind, Funkressourcen freigeben.

Für Datenverbindungen wird ein Datenratenfaktor DF definiert, der das Verhältnis von aktueller Datenrate zu angestrebter Datenrate für die Verbindung angibt. In diesem Beispiel werden für eine GPRS-Verbindung zwei Zeitschlitze benutzt. Um die neue EFR-Verbindung auf der ersten Sende-/Empfangseinheit zulassen zu können, muss die Zahl der der GPRS-Verbindung zugewiesenen Zeitschlitze auf 1 reduziert werden. Das bedeutet, dass für diese GPRS-Verbindung der Datenratenfaktor von DF=1 auf DF=0,5 reduziert wird. Dieses Herunterstufen führt zu einer Verschlechterung für die GPRS-Verbindung von 0,5 -1,0 = 0,5.

Bei der Entscheidung, auf welcher Sende-/Empfangseinheit der neuen EFR-Verbindung ein Kanal zugewiesen wird, erfolgt ein Vergleich der Verschlechterung des gesamten Funkkommunikationssystems und es wird die Sende-/Empfangseinheit ausgewählt, bei der die geringste gesamte Verschlechterung erwartet wird.

In dem genannten Beispiel wird bei Zuweisung eines Kanals auf der ersten Sende-/Empfangseinheit für die neue EFR-Verbindung keine Verschlechterung des Gesamtsystems erwartet. Für die bestehende GPRS-Verbindung wird eine Verschlechterung von -0,5 erwartet. Daher ergibt sich eine Verschlechterung für das Gesamtsystem von -0,5.

Bei einer Zuweisung eines Kanals auf der zweiten Sende-/Empfangseinheit wird dagegen für die neue EFR-Verbindung eine Verschlechterung von -0,4 erwartet. Bestehende Verbindungen sind dagegen nicht betroffen, so dass für diese eine Verschlechterung von 0 erwartet wird. Die Verschlechterung des Gesamtsystems ergibt sich somit zu -0,4. Da die Verschlechterung des Gesamtsystems bei Zuweisung eines Kanals auf der zweiten Sende-/Empfangseinheit geringer ist als bei Zuweisung auf der ersten Sende-/Empfangseinheit, wird der neuen EFR-Verbindung ein Kanal auf der zweiten Sende-/Empfangseinheit zugewiesen, obwohl EFR-Verbindungen bevorzugt Kanäle auf der ersten Sende-/Empfangseinheit zugewiesen werden sollten. In dem Beispiel wird dieses aber im Hinblick auf die Verschlechterung der GPRS-Verbindung unterlassen.

In dem Beispiel sind in der Zuweisungstabelle auch gebrochene Zahlen angegeben, was im Sinne einer Fuzzy-Theorie interpretiert werden kann. Auch die Zielfunktionen und Entscheidungsalgorithmen können im Sinne einer Fuzzy-Theorie interpretiert werden.

Die Definition der Kanalzuweisungstabelle stellt sicher, dass jeder Verbindung vorzugsweise ein bestimmter Kanal zugewiesen wird. Im Fall einer hohen Verkehrslast werden die Verbindungsanfragen weiterhin bedient, gegebenenfalls auf anderen, vielleicht schlechteren Kanälen. Dieses Verfahren ist sowohl auf der Ebene der Sende-/Empfangseinheiten, als auch auf der Ebene der einzelnen Kanäle einsetzbar.

Im Folgenden wird anhand eines Ausführungsbeispiels die Berechnung der Verschlechterung erläutert. Die Verschlechterung für Datenverbindungen wird berechnet unter Verwendung eines Datenratenfaktors DF, der das Verhältnis zwischen der aktuell zugewiesenen Datenrate zu der maximal möglichen Datenrate beziehungsweise einer geforderten Datenrate oder einer vom Netz angestrebten Zieldatenrate angibt. Für paketvermittelte Daten, wie zum Beispiel GPRS oder EGPRS gilt

$$DF = \text{aktuelle Datenrate / Zieldatenrate.}$$

Die Zieldatenrate kann zum Beispiel ein gewisser Anteil der maximalen Bitrate oder ein vom Netzwerkbetreiber definierter Wert sein, der für interaktive Dienste und Hintergrunddienste beziehungsweise für GPRS- und EGPRS-Dienste unterschiedlich ist. Für Echtzeitdienste wird zur Definition des Datenratenfaktors DF die garantierte Bitrate verwendet:

$$DF = \text{aktuelle Datenrate / garantierte Bitrate.}$$

Es wird ein Wert DFnew definiert, der den Datenratenfaktor DF nach einer Änderung der Kanal- beziehungsweise Funkressourcenzuweisung darstellt. Für neue Verbindungen wird der Wert DFnew gleich dem Eingangsdatenratenfaktor DF gesetzt. Wenn die Zuweisung der Funkressourcen für eine Verbindung, die einen Datenratenfaktor DF=1 aufweist, so verändert wird, dass der Wert DFnew = 0,5 ergibt, ist die Verschlechterung DoV für diese Verbindung $DoV = DFnew - DF = 0,5-1 = -0,5$.

Werden beispielsweise für zwei Verbindungen TBF1, TBF2 die zugewiesenen Funkressourcen reduziert, um Funkressourcen für eine neue Verbindung freizugeben, so wird die Verschlechterung $DOV_{TBF1}$, / $DOV_{TBF2}$ für die beiden Verbindungen folgendermaßen berechnet:

$$DoV_{TBF1} = DFnew_{TBF1} - DF_{TBF1}$$

$$DOV_{TBF2} = DFneW_{TBF2} - DFTBF2$$

Es wird beispielsweise ein Zeitschlitz für die neue Sprachverbindung benötigt. Um die Verschlechterung auf einer bestimmten Sende-/Empfangseinheit zu bestimmen, werden zunächst die zwei Verbindungen TBF1 und TBF2 ermittelt, die eine geringere Priorität haben und die Funkressourcen freigeben können. Die Funkressourcen für die Verbindung TBF1 werden so verringert, dass der Datenratenfaktor DF1 = 0,9 auf DF1new = 0,45 sinkt. Für die Verbindung TBF2 werden die Funkressourcen so reduziert, dass der Datenratenfaktor DBF2 = 1 auf DF2new = 0,75 sinkt. Somit ergibt sich für die Verschlechterung $DoV_{TBF1} = 0,45 - 0,9 = -0,45$.

$$DoV_{TBF2} = 0,75 -1 = -0,25.$$

Die Verschlechterung für die beiden bestehenden Verbindungen beträgt somit insgesamt (-0,45) +(-0,25) = -0,7.

Für verbindungsorientierte Datendienste wie zum Beispiel HSCSD (High Speed Circuit Switched Data) Verbindungen oder E-CSD (Enhanced Circuit Switched Data) Verbindungen wird der Datenratenfaktor beispielsweise folgendermaßen berechnet:

$$DF = \text{aktuelle Anzahl zugewiesener Zeitschlitze / maximal mögliche Anzahl zugewiesener Zeitschlitze.}$$

Die Verschlechterung DoV ist wiederum DoV = DFnew -DF. Für den Fall, dass eine neue Verbindung aufgebaut wird, und deshalb ein aktueller Wert des Datenfaktors DF nicht verfügbar ist, wird die Verschlechterung DoV - im Falle einer Zuweisung einer geringeren Anzahl an Kanälen - berechnet unter Verwendung des maximalen Wertes für den Datenratenfaktor maxDF = 1 zu

$$DoV = DFnew -maxDF.$$

Zur Definition der Verschlechterung von Sprachverbindungen können die Ergebnisse von AMR-Tests verwendet werden,die beispielsweise in 3GPP 26.075 veröffentlicht sind, die die von Testpersonen empfundene Sprachqualität in Abhängigkeit der gegebenen Signal-zu-Störverhältnisse C/I angeben (siehe Figur 2). In Figur 2 ist das Sprachempfinden in willkürlichen Einheiten (Mean Opinion Score MOS) in Abhängigkeit der Signal-zu-Störverhältnisse für eine AMR FR-Verbindung (Bezugszeichen 1) und für eine EFR-Verbindung (Bezugszeichen 2) eingetragen. Der Betreiber definiert beispielsweise eine minimale Qualitätsschwelle 3. Diese Schwelle 3 wird zum Beispiel auf drei MOS festgelegt. Da für fehlerfreie Übertragung der Wert der Sprachqualität für AMR FR-Verbindungen 4,06 MOS beträgt, beträgt der akzeptierte Bereich 4,06 MOS -3 MOS = 1,06 MOS. Nimmt das Signal-zu-Störverhältnis C/I ab, so dass der Wert für den Spracheindruck auf 3,53 sinkt, so beträgt die Verschlechterung

$$(3,53 \text{ MOS} - 4,06 \text{ MOS}) / 1.06 \text{ MOS} = -0,5.$$

Diese Funktionalität kann beispielsweise dann eingesetzt werden, wenn die Sprachqualität einer EFR-Verbindung, die auf einer Sende-/Empfangseinheit mit geringem Frequenzwiederholabstand zugewiesen ist, zu gering wird. In diesem Fall wird eine Verbindungsübergabe (Handover) auf die Sende-/Empfangseinheit mit großem Frequenzwiederholabstand ausgelöst.

Die Verschlechterung des gesamten Funkkommunikationssystems wird als Summe der Werte für die Verschlechterung für die einzelnen Verbindungen, die durch eine untersuchte Kanalzuweisung verursacht wird, berechnet.

Im Folgenden wird das Beispiel betrachtet, dass eine neue verbindungsorientierte Datenverbindung aufgebaut werden soll. Der Datenverbindung soll als HSCSD-Dienst vorzugsweise ein Kanal der ersten Sende-/Empfangseinheit zugewiesen werden. Der Wert einer Kanalzuweisungstabelle beträgt 0,6. Die maximale Anzahl an Zeitschlitzen, die der Datenverbindung zugewiesen werden kann, beträgt 4. Auf der ersten Sende-/Empfangseinheit sind beispielsweise nur zwei Zeitschlitze verfügbar. Auf der zweiten Sende-/Empfangseinheit sind drei Zeitschlitze verfügbar, der Wert in der Kanalzuweisungstabelle beträgt für diese zweite Sende-/Empfangseinheit jedoch nur 0,4.

Erste Option: Zuweisung der zwei Zeitschlitze auf der ersten Sende-/Empfangseinheit für die neue Datenverbindung: Damit ergibt sich ein Datenratenfaktor DFnew für diese Verbindungsanfrage von 2 Zeitschlitze / 4 Zeitschlitze = 0,5. Die Verschlechterung DoV = DFnew - max DF = 0,5 -1 = -0,5. Die Funkressourcen für andere Verbindungen, die von der ersten Sende-/Empfangseinheit unterstützt werden, werden nicht beeinflusst. Somit ergibt sich eine Verschlechterung TDoV für das gesamte Funkkommunikationssystem von TDoV = -0,5 für die erste Option.

Zweite Option: Zuweisung von vier Kanälen der ersten Sende-empfangseinheit für die neue Verbindung, wobei zwei Kanäle von GPRS-Verbindungen freigegeben werden müssen:

Es ergibt sich ein Datenratenfaktor DFnew für die neue Verbindung von: 4 Zeitschlitze / 4 Zeitschlitze = 1. Die Verschlechterung für die neue Verbindung beträgt: DFnew - max DF = 1 - 1 = 0. Die Verschlechterung DoV für die bestehenden GPRS-Verbindungen wird in diesem Beispiel mit -0,8 angenommen. Somit ergibt sich eine Verschlechterung TDoV des gesamten Funkkommunikationssystems von TDoV=-0,8 für die zweite Option.

Dritte Option: Zuweisung von drei Zeitschlitzen auf der zweiten Sende-/Empfangseinheit für die neue Verbindung:

Es ergibt sich ein Datenratenfaktor DFnew für die neue Verbindungsanfrage von 3 Zeitschlitze / 4 Zeitschlitze = 0,75. Die Verschlechterung für die neue Verbindungsanfrage beträgt DoV = DFnew -max DF = 0,75 -1 = -0,25. Die Verschlechterung für die neue Verbindung auf Grund der Zuweisung auf der nicht bevorzugten Sende-/Empfangseinheit, in der schlechtere Funkbedingungen erwartet werden, beträgt DoV = 0,4 -0,6 = -0,2. Die Verschlechterung TDoV für die neue Verbindungsanfrage für das Gesamtsystem beträgt somit -0,25 -0,2 = -0,45 für die dritte Option.

Da in diesem Beispiel die kleinste Verschlechterung TDoV für das gesamte Funkkommunikationssystem mit der dritten Option erreicht wird, werden der neuen Datenverbindung gemäß der dritten Option 3 Zeitschlitze auf der zweiten Sende-/Empfangseinheit zugewiesen.

In diesen Beispielen wurden keine Gewichtsfaktoren verwendet, um die verschiedenen Verschlechterungen für die bestehenden GPRS-Verbindungen oder für die Zuweisung auf der nicht bevorzugten Sende-/Empfangseinheit zu berechnen. Hierfür ist es beispielsweise möglich, eine Verschlechterung einer bestehenden Verbindung stärker zu bestrafen als die Zuweisung einer reduzierten Menge an Kanälen für eine neu hinzukommende Verbindung. Es können beispielsweise auch HSCSD-Verbindungen höher gewichtet werden, d.h. die Zuweisung einer geringen Anzahl an Kanälen als maximal möglich führt zu einer wesentlich stärkeren Degradierung des Gesamtsystems, als eine Reduzierung der Kanalanteile für bestehende GPRS-Dienste. Diese unterschiedlichen Gewichtungen können als Profile abgespeichert werden und/oder vom Netzbetreiber selbst erstellt werden.

Wird in dem Funkkommunikationssystem eine Zugangskontrolle in dem Sinne durchgeführt, dass Verbindungsanfragen abgewiesen werden, falls beispielsweise die Verschlechterung des Gesamtsystems TDoV kleiner als -0,5 ist, so könnte in dem dargestellten Beispiel die Kanalzuweisung nur entsprechend der ersten Option und der dritten Option erfolgen. Wäre in diesem Fall nur die zweite Option verfügbar, so müsste die neue Verbindungsanfrage abgewiesen werden. Dadurch wird sichergestellt, dass neue Dienste nur bedient werden, wenn die bestehenden Verbindungen nicht über eine vorgegebene Schwelle hinaus dadurch beeinträchtigt werden.

Durch fortlaufende Beobachtung der Dienstgüte können Maßnahmen ergriffen werden für den Fall, dass ein bestimmter Dienstgütepegel nicht beibehalten werden kann. Als Beispiel wird ein interaktiver Paketdatendienst betrachtet. Dieser Dienst hat anfangs einen Datenratenfaktor DF = 1. Wegen des Aufbaus einer neuen Sprachverbindung wird der Datenratenfaktor DF des interaktiven Datendienstes auf DF = 0,5 reduziert. Wegen einer Änderung der Funkverhältnisse ist ein Wechsel zu einem robusteren Kodierschema erforderlich, so dass der Datenratenfaktor DF auf 0,3 reduziert wird. Ist in dem Funkkommunikationssystem als minimaler Dienstgütepegel ein Datenratenfaktor von DF = 0,4 definiert, so wird durch das Unterschreiten dieses Pegels eine Aktion ausgelöst. Die Aktion kann in einer Veränderung der zugewiesenen Funkressourcen oder in einer Änderung der zugewiesenen Zelle von der Netzwerksteuerung aus bestehen. Zur Überprüfung, ob eine Änderung der zugewiesenen Funkressourcen möglich ist, werden wiederum die Zielfunktionen für die verschiedenen Optionen berechnet. Die Änderung der zugewiesenen Funkressourcen wird nachfolgend entsprechend der Option ausgelöst, mit der die geringste Verschlechterung des gesamten Funkkommunikationssystems verbunden ist, und mit der der geforderte Dienstgütepegel erzielt wird.

Entsprechende Dienstgütepegel können beispielsweise anhand von Figur 2 für Sprachdienste definiert werden. Oberhalb der Kurve 3 werden positive Verschlechterungswerte, unterhalb der Kurve 3 negative Verschlechterungswerte definiert. Eine Änderung der zugewiesenen Funkressourcen wird dadurch ausgelöst, dass ein negativer Verschlechterungswert innerhalb eines bestimmten Mittelungsintervalls einen vorgegebenen Wert überschreitet. Es werden wiederum die verschiedenen möglichen Optionen für eine geänderte Kanalzuweisung identifiziert und die entsprechenden Zielfunktionen berechnet. Ist die sich ergebende Gesamtverschlechterung geringer als die aktuelle Verschlechterung für die Verbindung, so wird eine Übergabeprozedur durchgeführt. Erreicht die Verschlechterung für eine Sprachverbindung einen nicht akzeptierbaren Wert, so kann eine Übergabeprozedur auch für den Fall ausgelöst werden, dass die Gesamtverschlechterung des Systems größer ist als die Verschlechterung für die Verbindung, um ein Abreissen der Sprachverbindung zu vermeiden.

Ferner besteht beispielsweise die Möglichkeit, dass für verschiedene Anforderungen unterschiedliche Profile heruntergeladen werden können. Damit haben verschiedene Betreiber die Möglichkeit, die Gewichte und damit das Resultat der Zielfunktions-Berechnungen anhand ihres Geschäftsinteresses und ihrer Systemausprägungen auszuwählen bzw. anzupassen.

Darüberhinaus kann durch Einsatz des Verfahrens ein Ausgleich der Verkehrslast (Load-Balancing) dadurch erzielt werden, dass, solange ungleiche Last in verschiedenen Frequenzbändern oder Netzen besteht, der Option, die zu einem besseren Ausgleich der Last führt, ein Bewertungsmaß entsprechend einer geringeren Verschlechterung zugeschrieben wird, während der Option, die zu einem höheren Ungleichgewichtszustand führt, ein Bewertungsmaß entsprechend einer höheren Verschlechterung des gesamten Funkkommunikationssystems zugeschrieben wird.

Im Folgenden wird anhand einer weiteren Ausführungsform ein Beispiel für einen Kanalzuteilungsalgorithmus erläutert, bei dem als Eingangsgrössen Kanalpriorität, Pathloss und Interferenz mit den entsprechenden Gewichten verwendet werden. Der Algorithmus basiert auf einem Zielfunktionskonzept, bei dem verschiedene Komponenten der Zielfunktion verschiedenen Kanalzuteilungsalgorithmen entsprechen. Die Komponenten werden mit Gewichten multipliziert, die einstellbar sind. Die Gewichte werden beispielsweise laufend anhand von Messungen so eingestellt, dass der effizienteste Algorithmus unter den gegebenen Bedingungen wirksam wird. Das kann beispielsweise bei kleiner Verkehrslast ein prioritätsgesteuerter und bei großer Verkehrslast ein interferenz/pathloss (Pfadverlust, d.h. durch die Ausbreitung verursachte Dämpfung)-gesteuerter Algorithmus sein.

Bei einer neuen Verbindungsanfrage oder einer Übergabeprozedur wird zur Bestimmung des Kanals, der künftig zugewiesen werden soll, mit Hilfe der Zielfunktion ein Gewicht für jeden freien Kanal berechnet:

Weight(channel)=      WPRIO* Priority-weight (channel) + WPLI*Pathlos Interference - weight (channel) + WINT*Interference- weight (channel).

Dabei bedeutet

WPLI Gewichtfaktor für das Pathloss-Interferenz Gewicht

WPRIO Gewichtsfaktor für das Prioritätsgewicht

WINT Gewichtsfaktor für das Interferenzgewicht

Das Gewicht weight eines Kanals ist ein Maß für die Eignung des Kanals für die Zuteilung: Je geringer das Gewicht, desto geeigneter ist der Kanal. Der freie Kanal mit dem kleinsten Gewicht wird dem Teilnehmer zugeteilt. Aus dem Gewicht wird ein Bewertungsmaß abgeleitet, das zur Beurteilung der Verschlechterung des Gesamtsystems verwendet wird.

Bei der Berechnung des Gewichts für den Kanal werden mehrere Komponenten berücksichtigt: Eine prioritätsbasierte, eine pathlossbasierte und eine interferenzbasierte Komponente. Jede dieser Komponenten berücksichtigt unterschiedliche Aspekte des Kanals: Die prioritätsbasierte Komponente ist umso niedriger, das heisst, der Kanal ist umso besser, je höher die Priorität des Kanals ist. In die Kanalpriorität fließen Messungen und Erfahrungen, die für den Kanal in der Vergangenheit gemacht wurden, ein: Je niedriger die Interferenz und je höher die Anzahl der erfolgreichen Kanalzuweisungen war, desto höher ist die Kanalpriorität relativ zu anderen Kanälen.

Die pathlossbasierte Komponente wird gemäß folgender Formel berechnet:

PathlossInterference_weight (user, channel) = WPL*pathloss (user) + WI* I(user, channel)- const.

Dabei ist

WPL                     Gewicht für Pathloss

pathloss (user)     der für den Teilnehmer user gemessene Pfadverlust zur eigenen Basisstation
WI                          Gewicht für Interferenz
I (user, channel)    Interferenz des Teilnehmers user auf einem bestimmten Kanal channel

Das kleinste Gewicht ergibt sich, wenn die gewichtete Summe von pathloss und interferenz am Nächsten zu einer Konstante const. liegt. Diese Komponente berücksichtigt, dass Teilnehmer, die einen großen Abstand zur Basisstation haben und damit einen großen pathloss, nur bei relativ kleinen Interferenzen selber eine ausreichende Qualität erreichen können, beziehungsweise die anderen Teilnehmer möglichst wenig stören.

Die Linearkombination der Komponenten der Zielfunktion wurde in diesem Ausführungsbeispiel ausgewählt um die Funktionsweise leicht verständlich zu machen. In der Realität können auch andersartige Funktionen (z.B. Polynome) verwendet werden.

Die interferenzbasierte Komponente berücksichtigt, dass das Kanalgewicht umso kleiner ist, je geringer die Interferenz im Kanal ist.

Sind alle Gewichte der Zielfunktion gleich 0, so wird der Kanal zufällig gewählt. Die Gewichtsfaktoren wie PRIO, WPLI, WINT für die verschiedenen Komponenten, können flexibel eingestellt werden. Sie können insbesondere in Abhängigkeit von der Anzahl der Teilnehmer in einer Zelle, der Interferenz von anderen Zellen, der Art des angeforderten Dienstes (Sprache oder Daten oder Ähnlichem) eingestellt werden, so dass der beste Algorithmus unter den gegebenen Bedingungen aktiviert wird. Durch Verwendung der Gewichtsfaktoren ist der Algorithmus lernfähig. Der Algorithmus kann dezentral in jeder Mobilfunkzelle eingesetzt werden, so dass in jeder Mobilfunkzelle selbständig über die Kanalvergabe entschieden werden kann. Dabei können die in der Mobilfunkzelle zur Verfügung stehenden Informationen ohne Signalisierungsaufwand für eine Kommunikation mit anderen Zellen angewendet werden.

**Patentansprüche**

1.  Verfahren zur Kanalzuweisung in einem Funkkommunikationssystem,

    -  bei dem für einen Teilnehmer ermittelt wird, welche Kanäle ihm für eine Verbindung auf Grund eines Anforderungsprofils für die Verbindung zugewiesen werden können,
    -  bei dem für die ermittelten Kanäle jeweils untersucht wird, welche Verschlechterung des Funkkommunikationssystems zu erwarten ist, wenn dem Teilnehmer für die Verbindung der jeweilige Kanal zugewiesen wird,
    -  bei dem dem Teilnehmer derjenige Kanal zugewiesen wird, für den die geringste Verschlechterung des Funkkommunikationssystems erwartet wird.

2.  Verfahren nach Anspruch 1,

    -  bei dem für die ermittelten Kanäle jeweils mit Hilfe einer Zielwertfunktion ein Bewertungsmaß berechnet wird, das ein Maß für die Verschlechterung des Funkkommunikationssystems ist,
    -  bei dem der Kanal ermittelt wird, für den das Bewertungsmaß ein Extremum annimmt,
    -  bei dem der Kanal, für den das Bewertungsmaß das Extremum annimmt, zugewiesen wird.

3.  Verfahren nach Anspruch 2,

    -  bei dem Funkparameter und/oder Gewichte als Eingangsgrößen für die Zielfunktion verwendet werden.

4.  Verfahren nach Anspruch 3,

    -  bei dem fortlaufend Messungen durchgeführt werden, aus deren Ergebnisse aktuelle Gewichtswerte abgeleitet werden,
    -  bei dem die aktuellen Gewichtswerte zur Anpassung der Gewichte verwendet werden.

5.  Verfahren nach Anspruch 3,

    -  bei dem die Gewichte in Abhängigkeit der Verkehrslast in dem Funkkommunikationssystem angepasst werden.

6.  Verfahren nach Anspruch 3,
    bei dem die Funkparameter aus einer Funknetzplanung abgeleitet werde.

7. Verfahren nach Anspruch 3,
bei dem Profile geladen werden, durch die die Eingangsgrößen und /oder Gewichte automatisch festgeklegtwerden.

8. Verfahren nach einem der Ansprüche 1 bis 7,

- bei dem bei einer Verbindungsanfrage geprüft wird, ob die ermittelte geringste Verschlechterung des Gesamtsystems eine vorgegebene Schwelle übersteigt,
- bei dem die Verbindungsanfrage abgewiesen wird, falls die ermittelte geringste Verschlechterung die vorgegebene Schwelle übersteigt.

9. Verfahren nach einem der Ansprüche 1 bis 8,

- bei dem für bestehende Verbindungen fortlaufend geprüft wird, ob der jeweiligen Verbindung ein anderer Kanal
  zugewiesen werden kann, für den eine geringere Verschlechterung des Gesamtsystems zu erwarten ist als
  für den aktuell zugewiesenen Kanal,
- bei dem falls der Differenzbetrag zwischen der aktuellen Verschlechterung und der zu erwartenden Verschlechterung einen vorgegebenen Wert übersteigt, der Verbindung der andere Kanal zugewiesen wird.

# FIG 1

Bestimme mögliche
Kanäle für Verbindung

Berechne für jeden
möglichen Kanal das
Bewertungsmaß mit Hilfe
einer Zielfunktion

Ermittle das Minimum
der berechneten
Bewertungsmaße

Weise den Kanal mit
minimalem
Bewertungsmaß zu

# FIG 2

**Europäisches Patentamt**

**EUROPÄISCHER RECHERCHENBERICHT**

Nummer der Anmeldung

EP 02 01 4987

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 530 917 A (ANDERSSON CLAES H ET AL) 25. Juni 1996 (1996-06-25) <br> * Spalte 2, Zeile 15 - Spalte 3, Zeile 51 * <br> * Spalte 7, Zeile 50 - Spalte 8, Zeile 3 * <br> * Spalte 9, Zeile 7 - Zeile 46 * <br> * Spalte 11, Zeile 40 - Spalte 12, Zeile 34 * <br> * Spalte 15, Zeile 29 - Spalte 16, Zeile 49 * <br> * Spalte 18, Zeile 13 - Zeile 30 * <br> --- | 1-9 | H04Q7/38 |
| X | WO 00 51390 A (ERICSSON TELEFON AB L M) 31. August 2000 (2000-08-31) <br> * Seite 8, Zeile 1 - Seite 9, Zeile 28 * <br> --- | 1 | |
| A | US 6 031 845 A (WALDING ANDREW M) 29. Februar 2000 (2000-02-29) <br> * Spalte 2, Zeile 65 - Spalte 3, Zeile 54 * <br> * Spalte 13, Zeile 50 - Spalte 14, Zeile 50 * <br> --- | 1 | |
| A | US 6 393 030 B1 (KIM KI SEON ET AL) 21. Mai 2002 (2002-05-21) <br> * Spalte 1, Zeile 37 - Zeile 43 * <br> * Spalte 1, Zeile 55 - Zeile 60 * <br> * Spalte 6, Zeile 47 - Spalte 7, Zeile 10 * <br> --- | 1 | |
| A | WO 97 46038 A (NORTHERN TELECOM LTD) 4. Dezember 1997 (1997-12-04) <br> * Zusammenfassung * <br> ----- | 1 | |

**RECHERCHIERTE SACHGEBIETE (Int.Cl.7)**

H04Q

Der vorliegende Recherchenbericht wurde für alle Patentansprüche erstellt

| Recherchenort | Abschlußdatum der Recherche | Prüfer |
|---|---|---|
| DEN HAAG | 28. Februar 2003 | Baas, G |

**ANHANG ZUM EUROPÄISCHEN RECHERCHENBERICHT**
**ÜBER DIE EUROPÄISCHE PATENTANMELDUNG NR.**      EP 02 01 4987

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5530917 | A | 25-06-1996 | SE | 500830 C2 | 12-09-1994 |
| | | | AU | 674756 B2 | 09-01-1997 |
| | | | AU | 6809994 A | 12-12-1994 |
| | | | CA | 2139627 A1 | 24-11-1994 |
| | | | CN | 1109702 A | 04-10-1995 |
| | | | DE | 69429495 D1 | 31-01-2002 |
| | | | EP | 0650649 A1 | 03-05-1995 |
| | | | FI | 950159 A | 13-01-1995 |
| | | | NZ | 266551 A | 26-02-1998 |
| | | | RU | 2122288 C1 | 20-11-1998 |
| | | | SE | 9301695 A | 12-09-1994 |
| | | | WO | 9427384 A1 | 24-11-1994 |
| | | | SG | 43773 A1 | 14-11-1997 |
| WO 0051390 | A | 31-08-2000 | AU | 3205200 A | 14-09-2000 |
| | | | CN | 1348663 T | 08-05-2002 |
| | | | EP | 1155588 A1 | 21-11-2001 |
| | | | JP | 2002538697 A | 12-11-2002 |
| | | | WO | 0051390 A1 | 31-08-2000 |
| | | | SE | 9900618 A | 23-08-2000 |
| US 6031845 | A | 29-02-2000 | GB | 2325376 A | 18-11-1998 |
| | | | AU | 7439598 A | 08-12-1998 |
| | | | WO | 9852296 A2 | 19-11-1998 |
| US 6393030 | B1 | 21-05-2002 | KR | 243343 B1 | 01-02-2000 |
| WO 9746038 | A | 04-12-1997 | WO | 9746038 A2 | 04-12-1997 |

EPO FORM P0461

Für nähere Einzelheiten zu diesem Anhang : siehe Amtsblatt des Europäischen Patentamts, Nr.12/82